# EUROPEAN PATENT SPECIFICATION

(11) **EP 2 860 735 B1**
(45) Date of publication and mention of the grant of the patent: **28.06.2017**
(21) Application number: 13796716.2
(22) Date of filing: 21.05.2013
(51) Int. Cl.: G21F 9/12, B01J 20/06, G21F 9/02, B01D 15/08, B01J 39/10, B01J 20/04, B01J 20/30, B01J 20/28, C02F 1/28, G21F 9/04, C02F 101/00, C01G 23/00

(54) **RADIOACTIVE MATERIAL ADSORBENT, ADSORPTION VESSEL, ADSORPTION TOWER, AND WATER TREATMENT DEVICE**
ADSORBENS FÜR RADIOAKTIVES MATERIAL, ADSORPTIONSGEFÄSS, ADSORPTIONSTURM UND WASSERBEHANDLUNGSVORRICHTUNG
ADSORBANT DE MATIÈRE RADIOACTIVE, CUVE D'ADSORPTION, TOUR D'ADSORPTION ET DISPOSITIF DE TRAITEMENT DES EAUX

(30) Priority: 29.05.2012 JP 2012122215
(43) Date of publication of application: 15.04.2015
(73) Proprietor: Kurita Water Industries Ltd., Nakano-ku, Tokyo 164-0001 (JP); Otsuka Chemical Co., Ltd., Osaka-shi, Osaka 540-0021 (JP)
(72) Inventor: MORI, Koichi, Tokyo 164-0001 (JP); ITOI, Nobuki, Tokushima-shi Tokushima 771-0193 (JP); HARI, Kumiko, Tokushima-shi Tokushima 771-0193 (JP)
(74) Representative: Hoffmann Eitle
(86) International application number: PCT/JP2013/064028
(87) International publication number: WO 2013/179940

(56) References cited:
- WO-A1-83/03819
- WO-A1-97/14652
- WO-A1-97/23290
- JP-A- S56 100 637
- JP-A- 2001 133 594
- JP-A- 2001 522 032
- US-A1- 2008 249 222
- DATABASE WPI Week 198139 Thomson Scientific, London, GB; AN 1981-70756D XP002752813, -& JP S56 100637 A (KAGAKU GIJUTSU-CHO KINZ) 12 August 1981 (1981-08-12)
- KEN'ICHI MIZOGUCHI ET AL.: 'Development of Partitioning Method: Adsorption Behavior of Sr on Titanic Acid Pelletized with Binder' JAERI-RESEARCH vol. 98-026, May 1998, page 39, XP008175444

## Description

### Field of Invention

The present invention relates to a radioactive material adsorbent, an adsorption vessel, and an adsorption tower filled with the radioactive material adsorbent, and a water treatment device including the adsorption vessel or the adsorption tower.

### Background of Invention

Radioactive strontium ⁹⁰Sr has a long half-life as with radioactive cesium and is a nuclear fission product exhibiting high diffusibility into water. An improvement of a system to treat water contaminated by radioactive strontium has been desired.

It is known that radioactive strontium in the water can be removed by adsorption with orthotitanic acid (Non patent literature 1).

As for a method for manufacturing a sodium titanate ion exchanger to adsorb radioactive strontium, a method has been proposed, wherein hydrous titanium oxide is made into a slurry with a liquid composed of alcohol and sodium hydroxide, heating, filtration, and drying are performed and, thereafter, crushing and classification are performed to produce granular sodium titanate having a sodium/titanium molar ratio of 0.6 or less (Patent literature 1).

WO 83/03819 describes the preparation of titanates, which have high capacities for waste nuclides, are suitable to be converted into ceramics and have a very good radiation tolerance.

WO 97/23290 concerns a method of producing titanate ion exchangers applicable in columns and packed bed operations, comprising the steps of mixing a solid hydrous titanium oxide in an alcohol with a base.

JP-S56-100637 describes the preparation of an ion exchange material which has high selective ion exchange capacity for Cs and has no volatility of Cs at the heat treatment for solidifying Cs by preparing the ion exchange material consisting of K₂O*nTiO₂ (n is integers of 1-5).

WO 97/14652 relates to a partially crystalline sodium nonatitanate strontium ion-exchange composition, exhibiting a certain XRD pattern and a strontium Kd of greater than 20,000 mL/g.

### List of Literature

### Patent Literature

Patent literature 1: Japanese Patent 4428541

### Non Patent Literature

Non Patent Literature 1: Masumitsu KUBOTA et al. "Development of group separation method: Development of treating method of liquid waste containing 90Sr and 134Cs with inorganic ion exchange column" JAERI-M 82-144 (1982) Object and Summary of Invention

### Object of Invention

The adsorption capacity of the granular sodium titanate produced by the method described in Patent literature 1 is small because the molar ratio of sodium serving as exchange cation/titanium is low.

The granular sodium titanate produced by the method described in Patent literature 1 is an agglomerate of primary particles. Therefore, the strength is low, micronization occurs because of pulverization due to vibration, impact, and the like applied during transportation and the like, and when the agglomerate is put into water, disintegration occurs and primary particles fall off. Consequently, the micronized particles and the primary particles cause a blockage of a strainer of an adsorption tower or pass through the adsorption tower strainer, so that a fine powder bearing radiation leak from the adsorption tower.

A first object of the present invention is to provide a radioactive material adsorbent having a large adsorption capacity.

A second object of the present invention is to provide a radioactive material adsorbent exhibiting excellent mechanical strength, having no problems of leakage of a fine powder and the like, and exhibiting excellent handleability as a water treatment agent.

A third object of the present invention is to provide an adsorption vessel and an adsorption tower filled with this radioactive material adsorbent, and a water treatment device including the above-described adsorption vessel or adsorption tower.

### Summary of Invention

The present inventors found that a titanate represented by K₂Ti₂O₅ was excellent in the amount of adsorption of radioactive material. Also, it was found that a radioactive material adsorbent which was produced by adding a binder to a powder of this titanate, performing forming into granular materials with a predetermined size, and performing firing, exhibited excellent mechanical strength, had no problems of leakage of a fine powder and the like, and exhibited excellent handleability as a water treatment agent.

The present invention has been made on the basis of such findings and the gist is as described below.
[1] A radioactive material adsorbent for adsorbing radioactive strontium in water, the adsorbent comprising a titanate powder represented by the formula K₂Ti₂O₅, wherein the titanate powder is formed to granular particles using a binder, the granular particles having a diameter within the range of 150 µm to 3000 µm.
[2] The radioactive material adsorbent according to [1], wherein the above-described titanate powder has an average particle diameter of 1 to 150 µm.
[3] The radioactive material adsorbent according to [1], wherein the above-described titanate powder has a shape in which a plurality of protrusions are extended in irregular directions.
[4] The radioactive material adsorbent according to [1], wherein the above-described binder is a clay mineral.
[5] The radioactive material adsorbent according to [4], wherein the clay mineral is attapulgite.
[6] The radioactive material adsorbent according to any one of [1], [4] and [5], wherein the formed particles are fired at a temperature ranging from 500°C to 900°C.
[7] An adsorption vessel filled with the radioactive material adsorbent according to any one of [1] to [6].
[8] An adsorption tower filled with the radioactive material adsorbent according to any one of [1] to [6].
[9] A water treatment device including the adsorption vessel according to [7] or the adsorption tower according to [8].

### Advantageous Effects of Invention

The titanate represented by K₂Ti₂O₅ has a radioactive material adsorption capacity larger than those of other titanates.

The radioactive material adsorbent produced by adding a binder to this titanate and performing forming and firing exhibits high mechanical strength, so that pulverization due to vibration, impact, and the like applied during transportation and the like and falling off of primary particles at the time of putting into water are reduced. Consequently, a blockage of an adsorption tower strainer and leakage of fine powder bearing radiation are prevented.

### Brief Description of Drawing

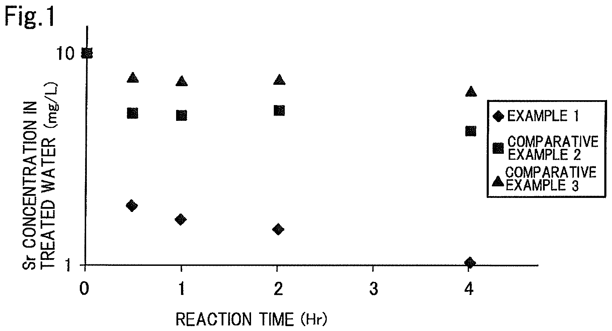

Fig. 1 is a graph showing results of Example 1 and Comparative examples 2 and 3.

### Description of Embodiments

The embodiments according to the present invention will be described below in detail. The embodiments described below are for the purpose of facilitating understanding of the present invention and do not limit the present invention. The present invention can be executed on the basis of various modifications of the individual constituents disclosed in the embodiments below within the bounds of not departing from the gist thereof.

A radioactive material adsorbent contains a titanate represented by M₂Ti₂O₅, where M is a univalent cation. According to the invention, M is potassium.

In general, the titanate is represented by M₂TiₙO₂ₙ₊₁, and the cation exchange capacity of the titanate as a cation exchanger becomes small as n becomes large because cation exchange sites per molecule of titanate are reduced.

From the viewpoint of cation exchange capacity, M₂TiO₃ is ideal, although the titanate represented by M₂TiO₃ is very unstable and is denatured to M₂Ti₂O₅ by heating and the like immediately.

The M₂Ti₂O₅ is thermally stable, exhibits excellent chemical resistance to acids, alkalis, and the like, and is suitable for an adsorbent for a water treatment.

Potassium is used as the univalent cation M of the titanate represented by M₂Ti₂O₅ used in the present invention because excellent positive ion exchangeability is exhibited. According to Y. Q. Jia, J. Solid State Chem., 95 (1991) 184, the ionic radius of strontium and the ionic radii of alkali metal elements are as shown in the table described below. The ionic radius of K is slightly larger than the ionic radius of Sr and, therefore, is suitable for a cation exchanger.

**[Table 1]**

| Coordination number | 4 | 6 | 8 | 9 | 10 | 12 |
|---|---|---|---|---|---|---|
| Sr | | 1.18 | 1.26 | | 1.36 | 1.44 |
| Li | 0.59 | 0.76 | 0.92 | | | |
| Na | 0.99 | 1.02 | 1.18 | 1.24 | | 1.39 |
| K | 1.37 | 1.38 | 1.51 | | | 1. 64 |
| Rb | | 1.52 | 1.61 | | 1.66 | 1.72 |
| Cs | | 1.67 | 1.74 | | 1.81 | 1.88 |
| Fr | | 1.80 | | | | |

In the case where synthesis is performed by a common melt process or the like, K₂Ti₂O₅, where a univalent cation M is potassium, takes on the shape of a fiber. In this regard, as described in WO2008/123046, it is possible to take on a shape in which a plurality of protrusions are extended in irregular directions by a production method to mechanochemically pulverize and mix a titanium source and a potassium source and, thereafter, perform firing at 650°C to 1,000°C. Granulated materials of the titanate having such a shape exhibit high powder strength, so that the minor axis size can be increased and, thereby, the cation exchange rate can be controlled.

The titanate represented by K₂Ti₂O₅ is preferably in the shape of a powder having an average particle diameter within the range of 1 to 150 µm. The average particle diameter can be measured with, for example, a laser diffraction particle size distribution measuring apparatus.

The titanate having an average particle diameter of 1 to 150 µm has a large adsorption capacity and holds superiority in handling in the forming step thereafter. That is, in the case where the average particle diameter is 1 µm or more, drawbacks, e.g., scattering and adhesion to a vessel due to static electricity, in the production do not occur. In the case where the average particle diameter is 150 µm or less, a reduction in the adsorption capacity due to a reduction in the specific surface area does not occur.

Therefore, in the present invention, it is preferable that a titanate powder having such a particle diameter be used. The average particle diameter of the titanate powder is more preferably 4 to 30 µm.

In the present invention, the above-described titanate is formed to particles having a diameter within the range of 150 µm to 3000 µm using a binder, and is particularly used after being formed and fired under a predetermined condition.

A spherical granular material is preferable in consideration of filling properties into the adsorption vessel and the adsorption tower.

The method for forming the titanate powder involves a method in which the titanate powder is formed into granular materials by using a binder.

Examples of the above-described binder include clay minerals, e.g., bentonite, attapulgite, sepiolite, allophane, halloysite, imogolite, and kaolinite; and silicate compounds, e.g., sodium silicate, calcium silicate, magnesium silicate, sodium metasilicate, calcium metasilicate, magnesium metasilicate, sodium aluminometasilicate, calcium aluminometasilicate, and magnesium aluminometasilicate. One type of them may be used alone or at least two types may be used in combination.

Among them, as for the binder, clay minerals which are natural products rather than the silicate compounds which are chemical products are preferably used because it is possible to produce inexpensively. Furthermore, among the clay minerals, preferably, fibrous clay minerals, e.g., attapulgite and sepiolite, are used from the viewpoint of the mechanical strength of the granular materials.

In the forming, it is preferable that a plasticizer to give the plasticity necessary for granulation be also added. Examples of the above-described plasticizer include starch, cornstarch, molasses, lactose, cellulose, cellulose derivatives, gelatin, dextrin, gum Arabic, alginic acid, polyacrylic acid, glycerin, polyethylene glycol, polyvinyl alcohol (PVA), polyvinyl pyrrolidone (PVP), water, methanol, and ethanol. One type of them may be used alone or at least two types may be used in combination.

The mechanical strength is improved by mixing a titanate, a binder, and a plasticizer at a predetermined mixing ratio and, thereafter, performing granulation-forming, drying, and firing, so that pulverization due to vibration, impact, and the like applied during transportation and the like, and falling off of primary particles at the time of putting into water can be reduced.

The usage of the binder is not specifically limited and is preferably 0.1 to 0.5 parts by mass relative to 1 part by mass of titanate powder. When the usage of the binder is too small, the strength of the resulting granular materials is low, so that pulverization due to vibration, impact, and the like applied during transportation and the like, and falling off of primary particles at the time of putting into water may occur. When the usage of the binder is too large, the proportion of the titanate represented by K₂Ti₂O₅ serving as an active site of cation exchange decreases and, thereby, the cation exchange capacity (amount of adsorption of radioactive material) decreases.

The usage of the plasticizer is not specifically limited and is preferably 0.01 to 0.1 parts by mass relative to 1 part by mass of titanate powder. In the case where the usage of the plasticizer is within the above-described range, the titanate powder can be formed effectively.

In consideration of the production cost, the plasticizer used is preferably water. Further preferably, a substance which has a property of thickening on the basis of contact with water and which contributes to bonding of particles to each other because of the thickening function thereof and water are used in combination. From this point of view, it is preferable that water and a cellulose derivative, PVA, or the like be used in combination as the plasticizer.

In the case where water and a cellulose derivative and/or PVA are used in combination as the plasticizer, the blend ratio (on a mass basis) of the water to the cellulose derivative and/or PVA in the binder is preferably 1,000:1 to 10:1. In the case where the blend ratio is within this range, the titanate powder can be formed effectively.

Examples of methods for forming the titanate powder by using the binder and the plasticizer include a method in which the titanate powder and the binder, e.g., attapulgite, are mixed and granulation-forming is performed while a viscous fluid of a mixture of water and a cellulose derivative or the like serving as the plasticizer is added to a mixed powder of the titanate and attapulgite and a method in which the binder, e.g., attapulgite, and the plasticizer, e.g., cellulose, in the state of powders are mixed to the titanate on an "as is" basis and granulation-forming is performed while a liquid, e.g., water, is added.

Specific examples of this granulation-forming method include tumbling granulation methods by using a drum granulator, a pan granulator, and the like; mixing kneading granulation methods by using FLEXOMIX, a vertical granulator, and the like; extrusion granulation methods by using a screw extrusion granulator, a roll extrusion granulator, a blade extrusion granulator, and a self-forming extrusion granulator; compression granulation methods by using a tablet granulator, a briquette granulator, and the like; and a fluidized-bed granulation method in which granulation is performed by spraying a binder, e.g., water or alcohol, while a floating and suspension state of a titanate powder and a binder in a fluid (mainly the air) blown upward is maintained. In consideration of forming into granular materials, tumbling granulation methods and mixing kneading granulation methods are preferable.

As for the size of the thus obtained titanate granular material, the particle diameter is 150 to 3,000 µm, and preferably 300 to 2,000 µm. When the size of the granular material is larger than the above-described range, the surface area decreases, so that the radioactive material adsorption ability is reduced. When the size is small, leakage from the strainer of the adsorption tower may occur. The particle diameter of the granular material corresponds to the diameter in the case where the granular material is a sphere. In the case of other shapes, the granular material concerned is sandwiched between two parallel plates and the length of a portion (distance between the two plates), where the distance between the plates is at the maximum, is referred to as the particle diameter.

In the present invention, it is preferable that the formed titanate granular material be fired in an air atmosphere at 500°C to 900°C. The binder powder and the titanate powder are sintered by this firing, and the particle strength is enhanced. In this firing treatment, if the firing temperature is lower than 500°C, an unfired portion remains and the particle strength is reduced. If the temperature is higher than 900°C, the structure of the titanate crystal is affected and the adsorption performance is degraded.

The firing time is usually about 0.5 to 10 hours, although depending on the firing temperature and the size of the granular material.

It is preferable that the radioactive material adsorbent according to the present invention be used by being filled in an adsorption vessel or an adsorption tower having a strainer structure in the lower portion or an upper portion and can be effectively applied to a water treatment device to remove radioactive materials by passing contaminated water containing radioactive materials, in particular radioactive strontium, through the adsorption vessel or the adsorption tower.

### EXAMPLES

The present invention will be specifically described below with reference to the examples and comparative examples.

### [Synthesis example 1: Synthesis of potassium dititanate]

In a Henschel mixer, 418.94 g of titanium oxide and 377.05 g of potassium carbonate were mixed. The resulting mixture was pulverized and mixed in a vibrating mill for 0.5 hours. A crucible was charged with 50 g of the resulting pulverized mixture, firing was performed in an electric furnace at 780°C for 4 hours, and the fired material was ground with a hammer mill, so that potassium dititanate having a shape in which a plurality of protrusions were extended in irregular directions was obtained. The average particle diameter was 20 µm.

### [Synthesis example 2: Synthesis of potassium tetratitanate]

In a Henschel mixer, 117.50 g of titanium oxide, 58.75 g of potassium carbonate, and 23.50 g of potassium chloride were mixed. A crucible was charged with 50 g of the resulting mixture, and firing was performed in an electric furnace at 1,000°C for 4 hours. The fired material was put into warm water and was disentangled, and filtration and drying were performed, so that potassium tetratitanate fibers were obtained.

In the following description, as for a radioactive material adsorbent in Comparative example 1, a commercially available product, trade name "SrTreat" (produced by Fortum), of granular sodium titanate shown in Patent literature 1 was used.

As for a radioactive material adsorbent in Comparative example 2, potassium tetratitanate obtained in Synthesis example 2 was used. As for a radioactive material adsorbent in Comparative example 3, potassium octatitanate (trade name "TISMO" chemical formula: K₂Ti₈O₁₇ produced by Otsuka Chemical Co., Ltd.) was used.

### [Example 1]

After 80 g of attapulgite powder serving as a binder was added to 400 g of potassium dititanate powder obtained in Synthesis example 1, high-speed kneading was performed with a mixing kneading granulator (trade name "VG-01", produced by Pawrex Corporation) at the number of revolutions of 400 rpm. Subsequently, 190 g of 4-percent by weight polyvinyl alcohol solution was added gradually, so that particles were snowballed by tumbling granulation. The resulting granulated materials were dried at 105°C for 2 hours and, thereafter, classification into the particle diameter of 300 to 1,180 µm was performed with a metal sieve. The classified granular materials were fired in an electric muffle furnace in an air atmosphere at 600°C for 2 hours.

### [Evaluation of resistance to primary particle falling off]

After 1 g of radioactive material adsorbent in Example 1 and 1 g of radioactive material adsorbent in Comparative example 1 were weighed and were put into their respective conical beakers, 99 g of city water (water of Nogi Town, Tochigi Prefecture) was added, and shaking and mixing was performed lightly. Subsequently, the turbidity of the supernatant fluid was measured in conformity with JIS K 0101 (Testing methods for industrial water) and the resistance to primary particle falling off was evaluated.

According to the result of the turbidity measurement, the turbidity of the radioactive material adsorbent in Example 1 was 1.9, whereas the turbidity of the radioactive material adsorbent in Comparative example 1 was 230.

As is clear from this result, in the water, falling off of primary particles of the radioactive material adsorbent in Example 1 was considerably reduced as compared with falling off of the radioactive material adsorbent in Comparative example 1.

### [Evaluation of radioactive material adsorption performance]

After 1 g of each of the radioactive material adsorbent in Example 1, the radioactive material adsorbent in Comparative example 2, and the radioactive material adsorbent in Comparative example 3 was weighed, they were put into their respective plastic containers. As for each container, 100 mL of aqueous solution, in which strontium chloride serving as a stable isotope was dissolved into city water (water of Nogi Town, Tochigi Prefecture) in such a way that the strontium concentration became 10 mg/L, was added. Shaking was performed for 30 minutes, 1 hour, 2 hours, or 4 hours and, thereafter, filtration was performed with a 0.45-µm membrane filter. The filtrate was introduced into ICP-MS and the strontium concentration in the filtrate was quantitatively determined. The results are shown in Fig. 1.

As is clear from Fig. 1, the strontium concentration was able to be reduced to the lowest concentration in the case of the radioactive material adsorbent in Example 1.

## Claims

1. A radioactive material adsorbent for adsorbing radioactive strontium in water, the adsorbent comprising a titanate powder represented by the formula K₂Ti₂O₅, wherein the titanate powder is formed to granular particles using a binder, the granular particles having a diameter within the range of 150 µm to 3000 µm.

2. The radioactive material adsorbent according to Claim 1, wherein the titanate powder has an average particle diameter of 1 to 150 µm.

3. The radioactive material adsorbent according to Claim 1, wherein the titanate powder has a shape in which a plurality of protrusions are extended in irregular directions.

4. The radioactive material adsorbent according to Claim 1, wherein the binder is a clay mineral.

5. The radioactive material adsorbent according to Claim 4, wherein the clay mineral is attapulgite.

6. The radioactive material adsorbent according to any one of Claims 1 to 5, wherein the formed particles are fired at a temperature ranging from 500°C to 900°C.

7. An adsorption vessel filled with the radioactive material adsorbent according to any one of Claims 1 to 6.

8. An adsorption tower filled with the radioactive material adsorbent according to any one of Claims 1 to 6.

9. A water treatment device comprising the adsorption vessel according to Claim 7 or the adsorption tower according to Claim 8.

## Patentansprüche

1. Adsorptionsmittel für ein radioaktives Material für die Adsoprtion von radioaktivem Strontium in Wasser, wobei das Adsorptionsmittel ein Titanatpulver umfasst, dass durch die Formel K₂Ti₂O₅ gegeben ist, wobei das Titanatpulver unter Verwendung eines Bindemittels zu granularen Partikeln geformt ist, wobei die granularen Partikel einen Durchmesser im Bereich von 150 *µ*m bis 3000 *µ*m aufweisen.

2. Adsorptionsmittel für ein radioaktives Material gemäß Anspruch 1, wobei das Titanatpulver einen mittleren Partikeldurchmesser von 1 bis 150 *µ*m aufweist.

3. Adsorptionsmittel für ein radioaktives Material gemäß Anspruch 1, wobei das Titanatpulver eine Form hat, bei der sich eine Vielzahl von Vorwölbungen in unregelmäßige Richtungen ausbreiten.

4. Adsorptionsmittel für ein radioaktives Material gemäß Anspruch 1, wobei das Bindemittel ein Tonmineral ist.

5. Adsorptionsmittel für ein radioaktives Material gemäß Anspruch 4, wobei das Tonmineral Attapulgit ist.

6. Adsorptionsmittel für ein radioaktives Material gemäß einem der Ansprüche 1 bis 5, wobei die geformten Partikel bei einer Temperatur im Bereich von 500°C bis 900°C gebrannt werden.

7. Adsorptionsgefäß gefüllt mit dem Adsorptionsmittel für ein radioaktives Material gemäß einem der Ansprüche 1 bis 6.

8. Adsorptionsturm gefüllt mit dem Adsorptionsmittel für ein radioaktives Material gemäß einem der Ansprüche 1 bis 6.

9. Vorrichtung für die Wasserbehandlung, die das Adsorptionsgefäß gemäß Anspruch 7 oder den Adsorptionsturm gemäß Anspruch 8 umfasst.

## Revendications

1. Adsorbant de matériau radioactif pour adsorber du strontium radioactif dans de l'eau, l'adsorbant comprenant une poudre de titanate représentée par la formule K₂Ti₂O₅, dans lequel la poudre de titanate est formée de particules granulaires utilisant un liant, les particules granulaires ayant un diamètre dans la plage de 150 µm à 3 000 µm.

2. Adsorbant de matériau radioactif selon la revendication 1, dans lequel la poudre de titanate a un diamètre de particule moyen de 1 à 150 µm.

3. Adsorbant de matériau radioactif selon la revendication 1, dans lequel la poudre de titanate a une forme dans laquelle plusieurs protubérances s'étendent dans des directions irrégulières.

4. Adsorbant de matériau radioactif selon la revendication 1, dans lequel le liant est un minéral argileux.

5. Adsorbant de matériau radioactif selon la revendication 4, dans lequel le minéral argileux est de l'attapulgite.

6. Adsorbant de matériau radioactif selon l'une quelconque des revendications 1 à 5, dans lequel les particules formées sont cuites à une température allant de 500°C à 900°C.

7. Récipient d'adsorption rempli avec l'adsorbant de matériau radioactif selon l'une quelconque des revendications 1 à 6.

8. Tour d'adsorption remplie avec l'adsorbant de matériau radioactif selon l'une quelconque des revendications 1 à 6.

9. Dispositif de traitement d'eau comprenant le récipient d'adsorption selon la revendication 7 ou la tour d'adsorption selon la revendication 8.
